# EUROPEAN PATENT APPLICATION

(11) **EP 3 327 823 A1**
(43) Date of publication of application: **30.05.2018**
(21) Application number: 16201032.6
(22) Date of filing: 29.11.2016
(51) Int. Cl.: H01M 2/16, H01M 4/04, H01M 10/052

(54) **ELECTRODE ASSEMBLY FOR A BATTERY CELL AND BATTERY CELL**

(71) Applicant: ROBERT BOSCH GMBH, 70442 Stuttgart (DE); Lithium Energy and Power GmbH & Co. KG, 70469 Stuttgart (DE)
(72) Inventor: Wurm, Calin Iulius, 86405 Meitingen (DE); Mingirulli, Nicola, 70197 Stuttgart (DE); Hiller, Martin Manuel, 70469 Stuttgart (DE); Fuchs, Franz, 70191 Stuttgart (DE)

(57) **Abstract**

The invention concerns an electrode assembly (10) for a battery cell (2), comprising an anode (11) and a cathode (12) that are separated from one another by means of a separator (18), an electrically conductive layer (32) being arranged on the separator (18) and the electrically conductive layer (32) being covered at least partially with a protective film (34). The protective film (34) is a dense passivation layer or a polymer coating. The invention also concerns a battery cell (2), comprising at least one electrode assembly (10).

## Description

The invention relates to an electrode assembly for a battery cell, comprising an anode and a cathode that are separated from one another by means of a separator, whereat an electrically conductive layer is arranged on the separator. The invention also relates to a battery cell that comprises at least on electrode assembly according to the invention.

### State of the Art

Electrical energy can be stored by means of batteries. Batteries change chemical energy into electrical energy. Particularly, rechargeable batteries are known that can be charged and discharged several times. Batteries or battery systems comprise several battery cells that are connected electrically in series or in parallel.

Especially, lithium ion battery cells are used in rechargeable batteries or battery systems. Lithium ion battery cells have a relatively high energy density. Lithium ion battery cells are used for instance in motor vehicles, in particular in electric vehicles (EV), in hybrid electric vehicles (HEV) and in plug-in hybrid vehicles (PHEV). Lithium ion battery cells may comprise one or more electrode assemblies.

Electrode assemblies have a positive electrode called cathode and a negative electrode called anode. The anode and the cathode are separated from one another by means of a separator. The electrodes of the battery cell are formed like foils and are wound with interposition of the separator to form an electrode roll, also referred to as jelly-roll. Alternatively, the electrodes can be layered to form an electrode stack.

The electrodes and the separator are impregnated by an electrolyte that is normally in liquid state or in solid state. The electrodes of the electrode assemblies are connected to the terminals of the battery cell. The battery cell can be charged and discharged via the terminals.

The cathode and the anode each comprise a current collector on which an active material is applied. The current collector of the cathode is typically made of aluminium and the current collector of the anode is typically made of copper. The active material for the cathode is, for example, a metal oxide. The active material for the anode is, for example, graphite or silicon. In the active material of the anode and cathode, lithium ions are intercalated.

In a charging process of the battery cell, the lithium ions are migrating from the cathode by dint of the electrolyte across the separator to the anode. Thereby, the lithium ions are stored into the active material of the anode reversibly. Simultaneously, electrons flow in an external circuit from the cathode to the anode. In a discharging process, electrons flow in an external circuit from the anode to the cathode, and lithium ions move within the battery cell from the anode to the cathode.

If metal contaminations, in particular Copper, are introduced into the battery cell during the production process, said contaminations can form metallic dendrites which grow from the anode to the cathode. Such dendrites may create electrical short circuits within the battery cell.

Document US 2014/0329120 A1 discloses a battery cell with internal means for detecting a growing dendrite. Said means comprise a separator that includes at least one functional layer. The functional layer is in particular metallic and electrically conductive.

However, arrangement of a metallic layer between anode and cathode can lead to dissolution of said metal due to chemical reactions with the electrolyte or its components with assistance of an electrical field present between the anode and the cathode. Dissolved metal ions tend to diffuse and migrate to the anode and are reduced there. Thus, the metal layer can affect the performance of the battery cell and lead to an increased risk of battery cell failure.

Document US 2010/0330425 A1 discloses electrode assemblies for battery cells including porous metallic layers between anode and cathode. Thereat, the metallic layer is coated with a passivation film.

Document US 2011/0033755 A1 discloses a lithium metal anode for a battery cell and a method for producing the anode. The anode is coated with a block copolymer, in particular diblock or triblock polymer.

Document US 2014/00779995 A1 discloses a method for producing positive electrodes for battery cells. Particles of the positive electrode active material are coated with a polymer that does not dissolve in electrolyte and can swell in the electrolyte solution.

### Disclosure of the Invention

The invention refers to an electrode assembly for a battery cell, comprising an anode and a cathode that are separated from one another by means of a separator which is ion conductive. Thereat, an electrically conductive layer which is also ion conductive is arranged on the separator. Said electrically conductive layer serves for detecting dendrites that are growing from the anode towards the cathode. When such a dendrite reaches the electrically conductive layer, a short circuit is generated between the anode and the electrically conductive layer which is measurable.

The, particularly porous, electrically conductive layer is covered at least partially with a protective film, particularly without losing the initial porosity. Said protective film serves for protecting the electrically conductive layer against the electrolyte that otherwise may dissolve the electrically conductive layer.

According to a first aspect of the invention, the protective film is a dense passivation layer.

In particular, the dense passivation layer is formed by anodic oxidation on a surface of the electrically conductive layer. For instance this can be realized by connecting the conductive layer on the separator to the cathode for a certain period of time.

According to an advantageous embodiment of the invention, the electrically conductive layer is made of aluminium.

Advantageously, the protective film is made of aluminium compound. Such aluminium compound is for example aluminium oxide (AL₂O₃), aluminium fluoride (AlF₃) or mixed aluminium fluoride oxide (AlₓF_{y}O_{z}) where x ranges from 1 to 2, y ranges from 0 to 3 and z ranges from 0 to 3.

According to an advantageous embodiment of the invention, the electrically conductive layer is made of titanium.

Advantageously, the protective film is made of titanium compound. Such titanium compound is for example titanium oxide (TiO₂), titanium fluoride (TiF₄) or mixed titanium fluoride oxide (TiₓO_{y}F_{z}) where x ranges from 1 to 2, y ranges from 0 to 4 and z ranges from 0 to 4.

According to a second aspect of the invention, the protective film is a polymer coating.

In particular, the polymer coating is formed by electrochemical polymerization onto a surface of the electrically conductive layer.

According to an advantageous embodiment of the invention, the electrically conductive layer is made of copper.

According to an advantageous embodiment, the polymer coating is made of electrically nonconductive polymers made of alkanes.

Preferably, the polymer coating is made of polypropylene or polyethylene.

According to an alternative embodiment, the polymer coating is made of aniline or thiophene.

According to a further development of the first aspect as well as of the second aspect of the invention, the electrically conductive layer is porous and hence is permeable for ions.

According to an advantageous embodiment of the invention, the protective film is at least partially electrically insulating.

Preferably, the electrically conductive layer is arranged between the separator and the anode. Hence, a dendrite growing from the anode towards the cathode can be detected before the dendrite reaches the separator.

Furthermore, the protective film is arranged to a far side of the electrically conductive layer in respect to the separator. Thereat, the protective film is covering the electrically conductive layer such that the electrically conductive layer does not get in touch with electrolyte which is present within a battery cell. Hence, the electrically conductive layer is enclosed between the protective film and the separator.

The invention also refers to a battery cell that comprises at least one electrode assembly according to the invention.

A battery cell according to the invention is usable advantageously in particular in an electric vehicle (EV), in a hybrid electric vehicle (HEV), in a plug-in hybrid vehicle (PHEV) or any stationary application for instance storing electrical energy of photovoltaic cells or cell assemblies.

### Advantages of the Invention

As mentioned, the electrically conductive layer serves for detecting dendrites that are growing from the anode towards the cathode, and the protective film serves for protecting the electrically conductive layer against the electrolyte that otherwise may dissolve the electrically conductive layer.

For some kinds of metal that can be used within the electrode assembly as an electrically conductive layer for detecting dendrites, a dense passivation layer can be produced relatively easily, in particular by anodic oxidation on a surface of the electrically conductive layer. For other kinds of metal that can be used within the electrode assembly as an electrically conductive layer for detecting dendrites, a polymer coating can be applied relatively easily, in particular by electrochemical polymerisation onto a surface of the electrically conductive layer.

Hence, independently of the kind of metal which is used within the electrode assembly, an early detection of dendrites is possible whereat dissolution of the electrically conductive layer is prevented or at least drastically decreased, compared to electrode assemblies known in the art. Both kinds of the protective film, that is the dense passivation layer as well as the polymer coating are relatively cheap and easily to apply on the surface of the electrically conductive layer.

### Brief Description of the Drawings

For a better understanding of the aforementioned embodiments of the invention as well as additional embodiments thereof, reference should be made to the description of embodiments below, in conjunction with the appended drawings showing:
Figure 1 a schematic view at a battery cell and
Figure 2 a schematic view at a separator with an electrically conductive layer and a protective film of the battery cell shown in figure 1.

Hereinafter, preferred embodiments of the present invention will be described with reference to the drawings. The drawings only provide schematic views of the invention. Like reference numerals refer to corresponding parts, elements or components throughout the figures, unless indicated otherwise.

### Description of Embodiments

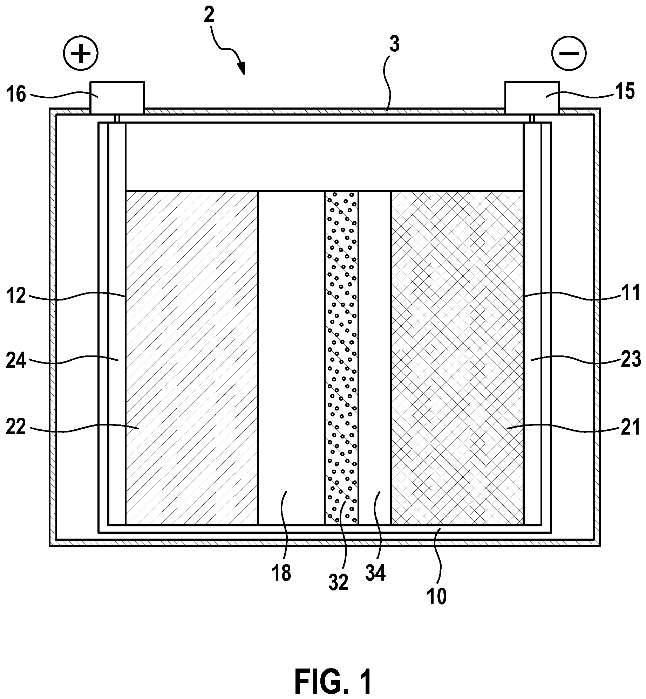

Figure 1 shows a schematic view at a battery cell 2. The battery cell 2 contains a housing 3 which has, for example, a prismatic or a cylindrical shape. The battery cell 2 further contains an electrode assembly 10, which is arranged within the housing 3.

The electrode assembly 10 contains an anode 11, a cathode 12 and a separator 18 that is arranged between the anode 11 and the cathode 12. Furthermore, the battery cell 2 contains a negative terminal 15 and a positive terminal 16. The terminals 15, 16 serve for charging and discharging the battery cell 2 and are mounted on the housing 3.

Presently, the electrode assembly 10 is shaped as a jelly roll. That means the anode 11 and the cathode 12 of the electrode assembly 10 are flat foils that are wound about an axis. The separator 18 that is also a flat foil is wound between the anode 11 and the cathode 12 about the same axis.

The housing 3 of the battery cell 2 is filled with a liquid electrolyte such that the electrode assembly 10 is surrounded by the electrolyte. The separator 18, respectively parts of the separator 18, is soaked in said liquid electrolyte. The electrolyte is ion conductive. The separator 18 is also ion conductive and is electrically insulating.

The battery cell 2 can also be of pouch type, for example. That means the anode 11 and the cathode 12 of the electrode assembly 10 consist of several flat foils that are stacked alternately to form a pile or a stack. The separator 18 also consists of several flat foils that are stacked between the foils of the anode 11 and the foils of the cathode 12. A bag or a pouch made of an electrically insulating material surrounds the electrode assembly 10 such that the electrode assembly 10 is electrically insulated.

An electrically conductive layer 32 is arranged on the separator 18 of the electrode assembly 10. The electrically conductive layer 32 is thereby covered with a protective film 34. The electrically conductive layer 32 is in direct contact with the separator 18. The protective film 34 is applied to a far side of the electrically conductive layer 32 in respect to the separator 18. That means, the electrically conductive layer 32 is arranged between the separator 18 and the protective film 34.

Additionally to the protective film 34 on the electrically conductive layer 32, there might be a second insulating porous layer isolating the electrically conductive layer 32 against the anode 11.

The electrically conductive layer 32 arranged on the separator 18 is made of a metal, in particular of copper, aluminium or titanium. Thereat, the electrically conductive layer 32 is porous and is presently formed like a net which includes meshes, respectively pores. Said pores allow ions to pass through. Hence, the electrically conductive layer 32 is also ion conductive.

The protective film 34 arranged on the electrically conductive layer 32 is electrically insulating. But, the protective film 34 is covering continuously the electrically conductive layer 32 while still keeping the porosity of the electrically conductive layer 32 and the separator 18. Hence, the unit comprising the separator 18, the electrically conductive layer 32 and the protective film 34 is electrically insulating and ion conductive.

The anode 11 contains an anode active material 21 formed as a flat foil and an anode current collector 23 formed as a flat foil. The anode active material 21 and the anode current collector 23 are attached to one another. The anode current collector 23 is electrically conductive and is made of a metal, in particular of copper. The anode current collector 23 is electrically connected to the negative terminal 15 of the battery cell 2.

The cathode 12 contains a cathode active material 22 formed as a flat foil and a cathode current collector 24 formed as a flat foil. The cathode active material 22 and the cathode current collector 24 are attached to one another. The cathode current collector 24 is electrically conductive and is made of a metal, in particular of aluminium. The cathode current collector 24 is electrically connected to the positive terminal 16 of the battery cell 2.

The unit comprising the separator 18, the electrically conductive layer 32 and the protective film 34 is arranged within the electrode assembly 10 such that the separator 18 is in direct contact with the cathode active material 22. The protective film 34 on the electrically conductive layer 32 is in direct contact with the anode active material 21. Thus, the electrically conductive layer 32 is arranged between the separator 18 and the anode 11. Also the protective film 34 is arranged between the separator 18 and the anode 11.

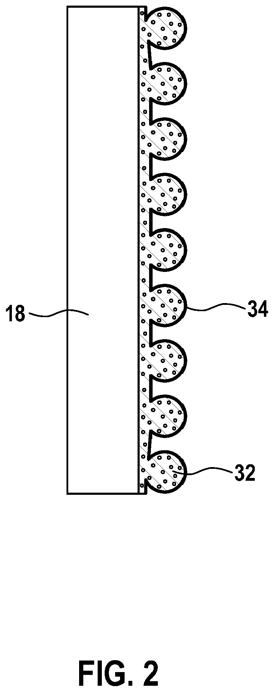

Figure 2 shows a schematic and detailed view at the unit comprising the separator 18, the electrically conductive layer 32 and the protective film 34 of the electrode assembly 10 of the battery cell 2 shown in figure 1. Thereat, a schematic sectional view of said unit is given.

As mentioned already, the electrically conductive layer 32 that is arranged on the separator 18 of the electrode assembly 10 is porous and is formed like a net which includes meshes, respectively pores. Said pores allow ions to pass through and hence, the pores render the electrically conductive layer 32 ion conductive.

The protective film 34 is covering the electrically conductive layer 32 such that the electrically conductive layer 32 cannot get in touch with the electrolyte within the battery cell 2. The electrically conductive layer 32 is enclosed between the protective film 34 and the separator 18.

According to a first exemplary embodiment which corresponds to the first aspect of the invention, the electrically conductive layer 32 is made of aluminium. The electrically conductive layer 32 is arranged on the separator 18 and the protective film 34 is arranged on the electrically conductive layer 32.

The protective film 34 is a passivation layer which is formed by anodic oxidation on a surface of the electrically conductive layer 32 which is located on the far side of the electrically conductive layer 32 in respect to the separator 18. Thereat, the protective film 34 is aluminium oxide (AL₂O₃), aluminium fluoride (AlF₃) or mixed aluminium fluoride oxide (AlₓF_{y}O_{z}) where x ranges from 1 to 2, y ranges from 0 to 3 and z ranges from 0 to 3. Said method of generating the protective film 34 as a passivation layer can also be transferred to other metals, in particular titanium. Advantageously, the protective film 34 is titanium oxide (TiO₂), titanium fluoride (TiF₄) or mixed titanium fluoride oxide (TiₓO_{y}F_{z}) where x ranges from 1 to 2, y ranges from 0 to 4 and z ranges from 0 to 4.

According to a second exemplary embodiment which corresponds to the second aspect of the invention, the electrically conductive layer 32 is made of copper. The electrically conductive layer 32 is arranged on the separator 18 and the protective film 34 is arranged on the electrically conductive layer 32.

The protective film 34 is a polymer coating which is made by electrochemical polymerisation onto a surface of the electrically conductive layer 32 which is located on the far side of the electrically conductive layer 32 in respect to the separator 18. Thereat, the protective film 34 is made of polypropylene. Alternatively, the protective film 34 can be made of aniline or of thiophene, for example.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings and those encompassed by the attached claims. The embodiments were chosen and described in order to explain the principles of the invention and its practical applications, to thereby enable others skilled in the art to utilize the invention and various embodiments with various modifications as are suited to the particular use contemplated.

## Claims

1. Electrode assembly (10) for a battery cell (2),
comprising an anode (11) and a cathode (12)
that are separated from one another by means of a separator (18),
an electrically conductive layer (32) being arranged on the separator (18) and the electrically conductive layer (32) being covered at least partially with a protective film (34),
**characterised in that**
the protective film (34) is a dense passivation layer.

2. Electrode assembly (10) according to claim 1, **characterised in that**
the dense passivation layer is formed by anodic oxidation on a surface of the electrically conductive layer (32).

3. Electrode assembly (10) according to one of the preceding claims,
**characterised in that**
the electrically conductive layer (32) is made of aluminium and/or an aluminium compound.

4. Electrode assembly (10) according to one of the preceding claims,
**characterised in that**
the electrically conductive layer (32) is made of titanium and/or of a titanium compound.

5. Electrode assembly (10) for a battery cell (2),
comprising an anode (11) and a cathode (12)
that are separated from one another by means of a separator (18),
an electrically conductive layer (32) being arranged on the separator (18),
the electrically conductive layer (32) being covered at least partially with a protective film (34),
**characterised in that**
the protective film (34) is a polymer coating.

6. Electrode assembly (10) according to claim 5, **characterised in that** the polymer coating is formed by electrochemical polymerization onto a surface of the electrically conductive layer (32).

7. Electrode assembly (10) according to one of claims 5 or 6, **characterised**
**in that**
the electrically conductive layer (32) is made of copper.

8. Electrode assembly (10) according to one of claims 5 to 7, **characterised in that**
the polymer coating is made of electrically nonconductive polymers made of alkanes.

9. Electrode assembly (10) according to one of claims 5 to 8, **characterised**
**in that**
the polymer coating is made of aniline or thiophene.

10. Electrode assembly (10) according to one of the preceding claims, **characterised in that**
the electrically conductive layer (32) is porous.

11. Electrode assembly (10) according to one of the preceding claims,
**characterised in that**
the protective film (34) is at least partially electrically insulating.

12. Electrode assembly (10) according to one of the preceding claims,
**characterised in that**
the electrically conductive layer (32) is arranged between the separator (18) and the anode (11).

13. Electrode assembly (10) according to one of the claims 1 to 11,
**characterised in that**
the electrically conductive layer (32) is arranged between the separator (18) and the cathode (12).

14. Electrode assembly (10) according to one of the preceding claims,
**characterised in that**
the protective film (34) is arranged to a far side of the electrically conductive layer (32) in respect to the separator (18).

15. Battery cell (2), comprising at least one electrode assembly (10) according to one of the preceding claims.

16. Usage of a battery cell (2) according to claim 15,
in an electric vehicle (EV), in a hybrid electric vehicle (HEV), in a plug-in hybrid vehicle (PH EV) or stationary.
